(19) Europäisches Patentamt
European Patent Office
Office européen des brevets

(11) **EP 2 884 708 B1**

(12) **FASCICULE DE BREVET EUROPEEN**

(45) Date de publication et mention
de la délivrance du brevet:
**01.02.2017 Bulletin 2017/05**

(51) Int Cl.:
**H04L 25/03** *(2006.01)*     *H04L 27/01 (2006.01)*

(21) Numéro de dépôt: **14197049.1**

(22) Date de dépôt: **09.12.2014**

(54) **Méthode itérative de synthèse de filtres numériques de mise en forme d'un signal**

Iteratives Verfahren zur Synthese von digitalen Filtern zur spektralen Signalformung

Iterative method for synthesising digital filters for shaping a signal

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.12.2013 FR 1302902**

(43) Date de publication de la demande:
**17.06.2015 Bulletin 2015/25**

(73) Titulaire: **Thales**
**92400 Courbevoie (FR)**

(72) Inventeur: **Baptiste, François**
**92622 Genneviliers Cedex (FR)**

(74) Mandataire: **HAMMES, Pierre et al**
**Marks & Clerk France**
**Immeuble Visium**
**22, avenue Aristide Briand**
**94117 Arcueil Cedex (FR)**

(56) Documents cités:
**US-A1- 2006 251 164**

• **TOKER C ET AL: "Joint Transceiver Design for MIMO Channel Shortening", IEEE TRANSACTIONS ON SIGNAL PROCESSING, IEEE SERVICE CENTER, NEW YORK, NY, US, vol. 55, no. 7, 1 juillet 2007 (2007-07-01), pages 3851-3866, XP011185855, ISSN: 1053-587X, DOI: 10.1109/TSP.2007.894231**
• **HEUNG MOOK KIM ET AL: "Modulation and Pre-Equalization Method to Minimize Time Delay in Equalization Digital On-Channel Repeater", IEEE TRANSACTIONS ON BROADCASTING, IEEE SERVICE CENTER, PISCATAWAY, NJ, US, vol. 54, no. 2, 1 juin 2008 (2008-06-01), pages 249-256, XP011343419, ISSN: 0018-9316, DOI: 10.1109/TBC.2008.921371**

**Description**

La présente invention concerne le domaine des filtres de mise en forme d'un signal dans le cadre d'une transmission sans fils en bande étroite entre un émetteur et un récepteur. L'invention s'applique plus précisément aux signaux modulés selon une modulation mono-porteuse.

L'invention porte sur une méthode itérative de synthèse de filtres numériques de mise en forme d'un signal et sur les filtres obtenus par application d'une telle méthode.

L'invention trouve un intérêt particulier notamment lorsqu'elle s'applique à des filtres de longueurs contraintes.

Dans le domaine des communications numériques sans fils, un signal numérique à transmettre est modulé et filtré avant d'être émis. Traditionnellement, on applique un premier filtre de mise en forme à un signal modulé avant sa transmission par voie radio et un second filtre de mise en forme, adapté au premier filtre, au signal reçu par un récepteur avant sa démodulation.

Le filtre de mise en forme, appliqué à l'émission, et le filtre adapté appliqué en réception, doivent être conformes à des gabarits de spectre précis répondant à de nombreuses contraintes. En outre, l'interférence entre symboles associée aux filtres doit être limitée pour ne pas dégrader les performances de la démodulation. En outre, pour les modulations linéaires, le rapport entre la puissance crête et la puissance moyenne doit être le plus faible possible pour pouvoir émettre à une puissance optimale.

Pour respecter toutes ces contraintes et obtenir de bonnes performances de transmission, la méthode usuelle consiste à utiliser des filtres en racine de cosinus surélevé. Ces filtres présentent les propriétés adéquates requises pour des filtres de mise en forme notamment car ils permettent de respecter le critère de Nyquist qui assure une élimination quasi-totale de l'interférence entre symboles.

Cependant, les filtres en racine de cosinus surélevé ne conservent leurs bonnes propriétés que lorsqu'ils sont synthétisés avec un grand nombre de coefficients. En effet, la troncature du filtre à un nombre de coefficients réduits diminue la sélectivité en fréquence du filtre.

Or, lorsque la capacité du processeur qui exécute le filtrage de mise en forme est limitée, l'utilisation de filtres de grande longueur est proscrite. Même pour des processeurs ayant des capacités de calcul plus élevées, l'opération de filtrage reste souvent une opération complexe à réaliser, la complexité étant directement proportionnelle à la longueur du filtre.

Il existe donc un besoin pour synthétiser des filtres de mise en forme de longueur courte, c'est-à-dire avec un faible nombre de coefficients.

Une alternative pour améliorer les performances consiste à appliquer une fenêtre de pondération au filtre tronqué, par exemple une fenêtre de Blackman ou une fenêtre de Hamming, cependant cette méthode génère de l'interférence entre symboles.

Le problème technique que vise à résoudre la présente invention consiste ainsi à trouver une méthode de synthèse de filtres de mise en forme qui permette d'assurer la réalisation de filtres ayant des bonnes propriétés en termes d'interférence entre symboles et de facteur crête malgré leur longueur contrainte.

Des méthodes de synthèse de filtres numériques adaptés pour la mise en forme de signaux à transmettre sont notamment décrites dans les publications de demandes de brevet EP 0441732 et WO 2000065790.

Ces solutions présentent notamment les inconvénients suivants. La solution proposée dans la demande EP 0441732 ne s'applique qu'aux modulations multi-porteuses tandis que la solution proposée dans la demande WO 2000065790 nécessite l'emploi d'une fonction de fenêtrage particulière.

On connait également d'autres méthodes relatives aux problématiques d'égalisation décrites dans les documents « Toker C etal : « joint transceiver design for MIMO channel shortening », IEE transactions on signal processing, 1er juillet 2007 », « Heung Mook Kim et al « Modulation and pre-equalization method to minimize time delay in equalization digital on-channel repeater », IEEE transactions on broadcasting, 1er juin 2008 » et US 2006/251164.

L'invention propose une solution au problème précité qui consiste notamment à compenser de façon itérative l'interférence inter symboles de façon globale sur le filtre de transmission égal à la convolution du filtre d'émission avec le filtre de réception.

L'invention présente notamment l'avantage de permettre une adaptation fine des paramètres des filtres à synthétiser en fonction des contraintes de gabarit visé et des contraintes sur les longueurs des filtres respectifs en émission et réception.

L'invention a ainsi pour objet une méthode itérative de synthèse de filtres numériques selon la revendication 1.

Selon un autre aspect particulier de l'invention, les itérations d'exécution sont arrêtées lorsque le niveau d'interférence inter-symboles est inférieur à un seuil donné.

Selon un aspect particulier de l'invention, le critère représentatif du niveau d'interférence inter-symboles sur le filtre de transmission est pris égal au ratio entre la somme des valeurs absolues des coefficients dudit filtre hormis le coefficient central et la valeur absolue du coefficient central dudit filtre.

Selon un aspect particulier de l'invention, le filtre égaliseur est multiplié par une fenêtre de pondération, le type de fenêtre de pondération étant sélectionné en fonction de la vitesse de convergence souhaitée de la méthode itérative.

Selon un aspect particulier de l'invention, le filtre d'émission et le filtre de réception sont des filtres en racine de cosinus surélevé.

Selon un aspect particulier de l'invention, les filtres en racine de cosinus surélevé sont multipliés par une fenêtre de pondération.

L'invention a également pour objet un programme d'ordinateur comportant des instructions pour l'exécution de la méthode itérative de synthèse de filtres selon l'invention, lorsque le programme est exécuté par un processeur ainsi qu'un filtre d'émission ou filtre de réception obtenu à partir de l'exécution de la méthode itérative de synthèse de filtres selon l'invention.

D'autres caractéristiques et avantages de la présente invention apparaîtront mieux à la lecture de la description qui suit en relation des figures annexées qui représentent :

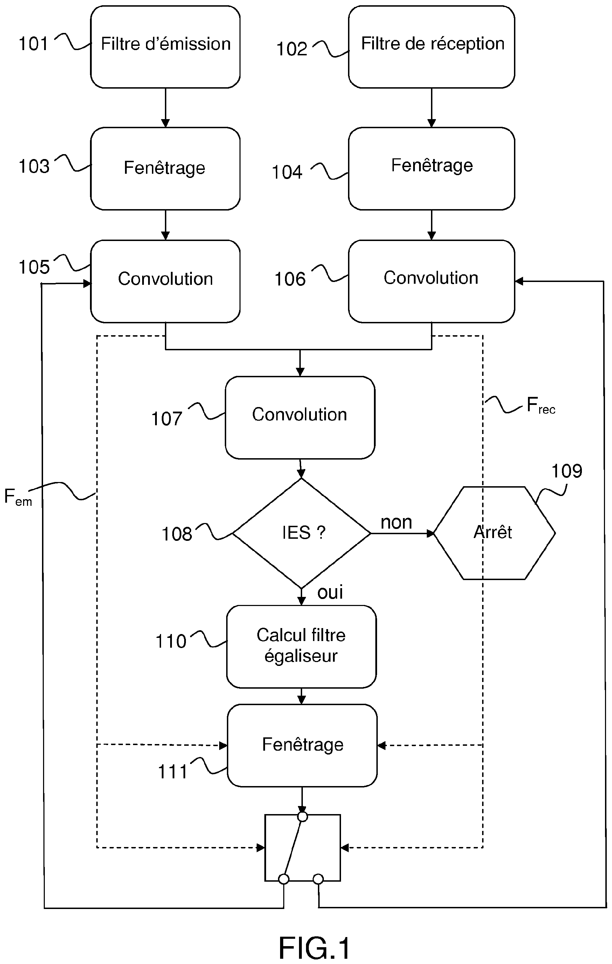

- La figure 1, un organigramme des étapes de mise en oeuvre du procédé de synthèse de filtres numériques selon l'invention,
- La figure 2, un diagramme de Kiviat illustrant les performances comparatives de filtres numériques obtenus par des méthodes usuelles et de filtres obtenus par exécution de la méthode itérative selon l'invention.

Le procédé itératif selon l'invention est initialisé avec la génération d'un premier filtre numérique d'émission 101 destiné à être appliqué à un signal modulé à émettre et d'un second filtre numérique de réception 102 destiné à être appliqué au signal reçu par un récepteur au préalable de sa démodulation.

Le filtre d'émission 101 et le filtre de réception 102 peuvent être des filtres en racine de cosinus surélevé comme usuellement employés dans le domaine des communications numériques.

Le filtre d'émission 101 et le filtre de réception 102 sont ensuite tronqués pour limiter leur longueur, et donc leur nombre de coefficients, afin de satisfaire aux contraintes d'implémentations de l'opération de filtrage dans les équipements émetteurs et récepteurs.

Optionnellement, le filtre d'émission 101 et le filtre de réception 102 peuvent être multipliés par une fenêtre de pondération 103,104 par exemple une fenêtre de Hamming ou une fenêtre de Blackman. L'opération de troncature des filtres peut également être considérée comme une multiplication par une fenêtre de pondération rectangulaire.

La première itération du procédé selon l'invention débute avec la convolution 107 du filtre d'émission 101 et du filtre de réception 102, les filtres étant éventuellement pondérés par une fenêtre. L'opération de convolution 107 permet d'obtenir le filtre global de transmission, autrement dit l'opération globale de filtrage que subit le signal entre la sortie du modulateur de l'équipement émetteur et l'entrée du démodulateur de l'équipement récepteur.

Un critère 108 représentatif du niveau d'interférence inter symboles sur le filtre de transmission $F_{trans}$

est ensuite calculé. La détermination du niveau d'interférence inter symboles est une pratique bien connue de l'Homme du métier spécialiste des communications numériques. L'interférence inter symboles est un phénomène de distorsion qui a pour conséquence que, lorsqu'un signal est filtré par un filtre ayant un niveau d'interférences inter symboles non nul, le symbole courant peut être pollué par les symboles précédents.

Un critère représentatif de l'interférence inter symboles est par exemple donné par la relation suivante :

$$D_{\max} = \frac{\sum_{n \neq 0} |r(nT)|}{|r(0)|},$$

où r(nT) sont les coefficients du filtre R pris aux temps symboles nT.

Lorsque le rapport $D_{\max}$, est strictement inférieur à 1, le diagramme de l'oeil du signal filtré par le filtre R est complètement ouvert et l'interférence inter symboles est nulle. Inversement, un rapport $D_{\max}$ supérieur à 1 est indicateur de la présence d'interférence inter symboles.

Si le niveau d'interférence inter symboles du filtre de transmission est faible, autrement dit si le critère 108 représentatif du niveau d'interférence inter symboles est inférieur à un seuil donné, le procédé selon l'invention est arrêté à l'itération courante et les filtres d'émission et de réception synthétisés sont ceux obtenus à la dernière itération.

Si le niveau d'interférence inter symboles du filtre de transmission est élevé, autrement dit si le critère 108 représentatif du niveau d'interférence inter symboles est supérieur à un seuil donné, alors un filtre égaliseur 110 est calculé pour réduire le niveau d'interférence inter symboles. Ici encore, l'Homme du métier saura, sans difficulté, calculer un filtre égaliseur adapté à partir des connaissances générales du domaine des communications numériques telles que décrites par exemple dans l'ouvrage de référence « Digital communications », John Proakis et al. chap 10-2 linear equalization.

Le filtre égaliseur 110 est ensuite tronqué via une opération de fenêtrage 111 pour limiter son nombre de coefficients au nombre de coefficients du filtre d'émission 101 ou du filtre de réception 102.

La troncature du filtre égaliseur 110 peut notamment consister à ne sélectionner que les N premiers coefficients du filtre, N étant le nombre de coefficients souhaité.

Optionnellement, l'opération de fenêtrage 110 peut également consister à multiplier le filtre égaliseur par une fenêtre de pondération afin de paramétrer la vitesse de convergence du procédé itératif selon l'invention. Une fenêtre rectangulaire (fenêtre de troncature) entrainera une convergence rapide alors qu'une fenêtre de pondération du type Blackman ou Hamming entrainera une convergence plus lente.

Une étape d'aiguillage 112 permet ensuite d'orienter l'application du filtre égaliseur sur le filtre d'émission ou sur le filtre de réception. L'aiguillage 112 est paramétré en fonction de la proximité de la réponse fréquentielle desdits filtres à un gabarit visé.

Si le choix d'aiguillage 112 se porte sur le filtre d'émission 101, alors ce dernier est convolué 105 avec le filtre égaliseur 110 pour obtenir un nouveau filtre d'émission Fem qui sert de point d'entrée à l'itération suivante.

De même, si le choix d'aiguillage 112 se porte sur le filtre de réception 102, alors ce dernier est convolué 106 avec le filtre égaliseur 110 pour obtenir un nouveau filtre de réception Frec qui sert de point d'entrée à l'itération suivante.

A chaque itération, le filtre égaliseur est appliqué sur l'un ou l'autre des deux filtres Fem,Frec et le filtre résultant de cette convolution remplace le filtre obtenu à l'itération précédente.

L'application alternative du filtre égaliseur sur la voie d'émission ou la voie de réception permet d'ajuster au mieux les caractéristiques spectrales des filtres, leur sélectivité fréquentielle et le facteur crête.

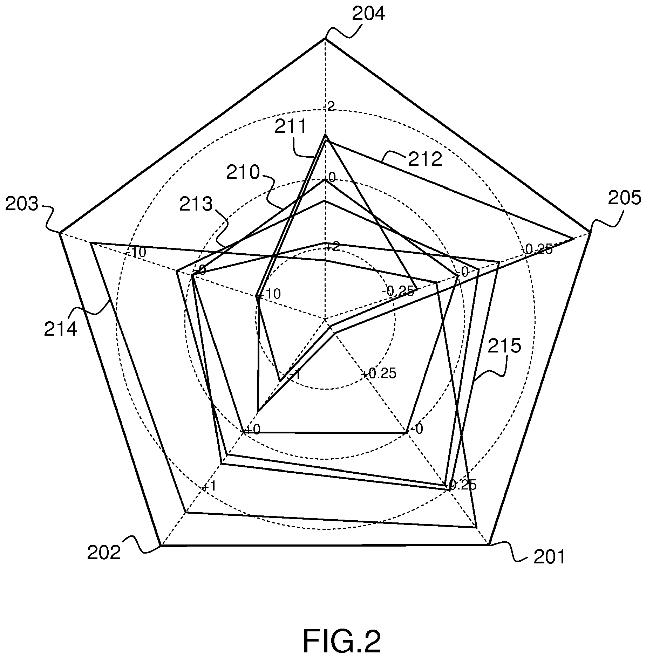

La figure 2 illustre, sur un diagramme de Kiviat, les performances de filtres numériques synthétisés via une méthode usuelle ou via la méthode itérative selon l'invention.

Les performances de différents filtres sont représentées sur le diagramme de Kiviat de la figure 2 en fonction de cinq caractéristiques :

- le facteur crête 201 ou « back off » en anglais,
- la tenue à la désynchronisation temporelle 202, autrement dit la désynchronisation temporelle minimum qui entraine une erreur de détection d'un symbole filtré en réception,
- la tenue aux canaux adjacents 203, autrement dit l'atténuation moyenne du filtre numérique de réception dans un canal adjacent,
- la bande à 99% d'énergie 204, c'est-à-dire la bande de fréquence minimale contenant plus de 99% de l'énergie de la réponse impulsionnelle du filtre numérique d'émission,
- le rapport signal à bruit 205 nécessaire pour obtenir un taux d'erreur paquet inférieur ou égal à $10^{-2}$ sur le signal reçu.

Les caractéristiques représentées sur le diagramme de la figure 2 sont celles du filtre global de transmission constitué par la convolution du filtre d'émission et du filtre de réception. Tous les filtres d'émission et de réception utilisés sont des filtres en racine de cosinus surélevé. Dans l'exemple de la figure 2, la longueur du filtre d'émission représente 5 symboles 1/3 et la longueur du filtre de réception représente 8 symboles.

Le diagramme 210 correspond à un filtre d'émission et un filtre de réception de coefficients de retombée (ou coefficients de roll-off) de 0,35 multipliés par une fenêtre rectangulaire et sans application de la méthode itérative selon l'invention.

Le diagramme 211 correspond à un filtre d'émission et un filtre de réception de coefficients de retombée (ou coefficients de roll-off) de 0,25 multipliés par une fenêtre rectangulaire et sans application de la méthode itérative selon l'invention.

Le diagramme 212 correspond à un filtre d'émission et un filtre de réception de coefficients de retombée (ou coefficients de roll-off) de 0,25 multipliés par une fenêtre rectangulaire et avec application de la méthode itérative selon l'invention avec une première itération dans laquelle le filtre égaliseur est appliqué au filtre de réception et une seconde itération dans laquelle le filtre égaliseur est appliqué au filtre d'émission.

Le diagramme 213 correspond à un filtre d'émission et un filtre de réception de coefficients de retombée (ou coefficients de roll-off) de 0,35 multipliés par une fenêtre Gaussienne (l'écart type étant égal à 0.56 pour le filtre d'émission et à 1 pour le filtre de réception) et avec application de la méthode itérative selon l'invention avec une première itération dans laquelle le filtre égaliseur est appliqué au filtre de réception et une seconde itération dans laquelle le filtre égaliseur est appliqué au filtre d'émission.

Le diagramme 214 correspond à un filtre d'émission et un filtre de réception de coefficients de retombée (ou coefficients de roll-off) de 0,45 multipliés par une fenêtre de Hamming et avec application de la méthode itérative selon l'invention avec une première itération dans laquelle le filtre égaliseur est appliqué au filtre de réception et une seconde itération dans laquelle le filtre égaliseur est appliqué au filtre d'émission.

Enfin, le diagramme 215 correspond à un filtre d'émission de coefficient de retombée (ou coefficient de roll-off) de 0,48 multiplié par une fenêtre de Tukey de paramètre 0,26 et un filtre de réception de coefficient de retombée de 0,35 multiplié par une fenêtre rectangulaire et avec application de la méthode itérative selon l'invention avec une première itération dans laquelle le filtre égaliseur est appliqué au filtre de réception et une seconde itération dans laquelle le filtre égaliseur est appliqué au filtre d'émission.

On vérifie de manière générale sur le diagramme de la figure 2 que les configurations les plus favorables spectralement sont celles les plus défavorables temporellement et vice et versa. Cependant au-delà de cette première constatation, certaines configurations se comportent mieux que d'autres.

Par exemple, l'effet de la méthode itérative selon l'invention sur les filtres de coefficients de retombée égaux à 0.25 (diagramme 212 par rapport au diagramme 211) est important, le gain en rapport signal à bruit est de 0.6dB.

On constate également que le filtre correspondant au diagramme 213 a des caractéristiques globalement meilleures que le filtre de référence correspondant au diagramme 210. Les performances en taux d'erreur sont également meilleures. Le gain sur le facteur crête est d'environ 0.20dB.

Enfin, le filtre correspondant au diagramme 215 permet de maximiser le couple { facteur crête, rapport signal à bruit } avec un gain cumulé de plus de 0.4 dB.

La méthode itérative de synthèse de filtres numériques selon l'invention peut être mise en oeuvre en tant que programme d'ordinateur comportant des instructions pour son exécution. Le programme d'ordinateur peut être enregistré sur un support d'enregistrement lisible par un processeur.

## Revendications

1. Méthode itérative de synthèse de filtres numériques comprenant les étapes suivantes :

   • La génération d'un filtre d'émission (101) destiné à être appliqué à un signal à émettre,
   • La génération d'un filtre de réception (102) destiné à être appliqué à un signal reçu,
   ladite méthode étant **caractérisée en ce qu'**elle comprend les étapes suivantes exécutées itérativement :

   • La convolution (107) du filtre d'émission et du filtre de réception pour générer un filtre de transmission,
   • La détermination (108) d'un critère représentatif du niveau d'interférence inter-symboles sur ledit filtre de transmission et si le niveau d'interférence inter-symboles est supérieur à un niveau donné,
   • Le calcul d'un filtre égaliseur de l'interférence inter-symboles (110),
   • Le remplacement du filtre d'émission par le filtre d'émission convolué (105) avec le filtre égaliseur ou le remplacement du filtre de réception par le filtre de réception convolué (106) avec le filtre égaliseur, en fonction d'un gabarit fréquentiel désiré du filtre d'émission et/ou du filtre de réception.

2. Méthode itérative de synthèse de filtres selon la revendication 1 dans laquelle les itérations d'exécution sont arrêtées (109) lorsque le niveau d'interférence inter-symboles est inférieur à un seuil donné.

3. Méthode itérative de synthèse de filtres selon l'une des revendications précédentes dans laquelle le critère représentatif du niveau d'interférence inter-symboles sur le filtre de transmission est pris égal au ratio entre la somme des valeurs absolues des coefficients dudit filtre hormis le coefficient central et la valeur absolue du coefficient central dudit filtre.

4. Méthode itérative de synthèse de filtres selon l'une des revendications précédentes dans laquelle le filtre égaliseur est multiplié (111) par une fenêtre de pondération, le type de fenêtre de pondération étant sélectionné en fonction de la vitesse de convergence souhaitée de la méthode itérative.

5. Méthode itérative de synthèse de filtres selon l'une des revendications précédentes dans lequel le filtre d'émission et le filtre de réception sont des filtres en racine de cosinus surélevé.

6. Méthode itérative de synthèse de filtres selon la revendication 6 dans laquelle les filtres en racine de cosinus surélevé sont multipliés (103,104) par une fenêtre de pondération.

7. Programme d'ordinateur comportant des instructions pour l'exécution de la méthode itérative de synthèse de filtres selon l'une des revendications précédentes, lorsque le programme est exécuté par un processeur.

8. Filtre d'émission ou filtre de réception obtenu à partir de l'exécution de la méthode itérative de synthèse de filtres selon l'une des revendications 1 à 6.

## Patentansprüche

1. Iteratives Verfahren zum Synthetisieren von digitalen Filtern, das die folgenden Schritte beinhaltet:

   • Erzeugen eines Emissionsfilters (101) zum Anwenden auf ein zu emittierendes Signal;
   • Erzeugen eines Empfangsfilters (102) zum Anwenden auf ein empfangenes Signal,
   wobei das Verfahren **dadurch gekennzeichnet ist, dass** es die folgenden iterativ ausgeführten Schritte beinhaltet:

   • Falten (107) des Emissionsfilters und des Empfangsfilters, um ein Transmissionsfilter zu erzeugen;
   • Bestimmen (108) eines Kriteriums, das das Intersymbol-Interferenzniveau auf dem Transmissionsfilter repräsentiert, und wenn das Niveau an Intersymbol-Interferenz höher ist als ein gegebenes Niveau, dann
   • Berechnen (110) eines Entzerrungsfilters für die Intersymbol-Interferenz;
   • Ersetzen des Emissionsfilters durch das mit dem Entzerrungfilter gefalteten Emissionsfilter (105) oder Ersetzen des Empfangsfilters durch das mit dem Entzerrungsfilter gefaltete Empfangsfilter (106) in Abhängigkeit von einem gewünschten Frequenzmuster des Emissionsfilters und/oder des Empfangsfilters.

**2.** Iteratives Filtersynthetisierverfahren nach Anspruch 1, wobei die Ausführungsiterationen gestoppt (109) werden, wenn das Intersymbol-Interferenzniveau niedriger ist als eine gegebene Schwelle.

**3.** Iteratives Filtersynthetisierverfahren nach einem der vorherigen Ansprüche, wobei das Kriterium, das das Intersymbol-Interferenzniveau auf dem Transmissionsfilter repräsentiert, als gleich dem Verhältnis zwischen der Summe der Absolutwerte der Koeffizienten des Filters abgesehen von dem Zentralkoeffizienten und dem absoluten Wert des Zentralkoeffizienten des Filters genommen wird.

**4.** Iteratives Filtersynthetisierverfahren nach einem der vorherigen Ansprüche, wobei das Entzerrungsfilter mit einem Gewichtungsfenster (111) multipliziert wird, wobei der Gewichtungsfenstertyp in Abhängigkeit von der gewünschten Konvergenzgeschwindigkeit des iterativen Verfahrens ausgewählt wird.

**5.** Iteratives Filtersynthetisierverfahren nach einem der vorherigen Ansprüche, wobei das Emissionsfilter und das Empfangsfilter überhöhte Wurzel-Kosinus-Filter sind.

**6.** Iteratives Filtersynthetisierverfahren nach Anspruch 6, wobei die überhöhten Wurzel-Kosinus-Filter mit einem Gewichtungsfenster multipliziert (103, 104) werden.

**7.** Computerprogramm, das Anweisungen zum Ausführen des iterativen Filtersynthetisierverfahrens nach einem der vorherigen Ansprüche beinhaltet, wenn das Programm von einem Prozessor ausgeführt wird.

**8.** Emissionsfilter oder Empfangsfilter, erhalten nach der Ausführung des iterativen Filtersynthetisierverfahrens nach einem der Ansprüche 1 bis 6.

**Claims**

**1.** An iterative method for synthesising digital filters, comprising the following steps:

> • generating an emission filter (101) intended to be applied to a signal to be emitted;
> • generating a reception filter (102) intended to be applied to a received signal,
> said method being **characterised in that** it comprises the following steps executed in an iterative manner:

> • convoluting (107) said emission filter and said reception filter so as to generate a transmission filter;

> • determining (108) a criterion representing the level of inter-symbol interference on said transmission filter and, if said level of inter-symbol interference is higher than a given level, then
> • computing (110) an equalising filter for the inter-symbol interference;
> • replacing said emission filter with the emission filter (105) convoluted with said equalising filter or replacing said reception filter with the reception filter (106) convoluted with said equalising filter, as a function of a desired frequency pattern of said emission filter and/or of said reception filter.

**2.** The iterative method for synthesising filters according to claim 1, wherein the execution iterations are stopped (109) when said level of inter-symbol interference is lower than a given threshold.

**3.** The iterative method for synthesising filters according to any one of the preceding claims, wherein the criterion that represents said level of inter-symbol interference on said transmission filter is taken as equal to the ratio between the sum of the absolute values of the coefficients of said filter apart from the central coefficient and the absolute value of the central coefficient of said filter.

**4.** The iterative method for synthesising filters according to any one of the preceding claims, wherein said equalising filter is multiplied (111) by a weighting window, the type of weighting window being selected as a function of the required convergence speed of the iterative method.

**5.** The iterative method for synthesising filters according to any one of the preceding claims, wherein said emission filter and said reception filter are filters with a root-raised-cosine.

**6.** The iterative method for synthesising filters according to claim 6, wherein said root-raised-cosine filters are multiplied (103, 104) by a weighting window.

**7.** A computer program comprising instructions for executing the iterative method for synthesising filters according to any one of the preceding claims, when said program is executed by a processor.

**8.** An emission filter or reception filter obtained from executing the iterative method for synthesising filters according to any one of claims 1 to 6.

FIG.1

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0441732 A
- WO 2000065790 A
- US 2006251164 A

**Littérature non-brevet citée dans la description**

- **TOKER C et al.** joint transceiver design for MIMO channel shortening. *IEE transactions on signal processing,* 01 Juillet 2007
- **HEUNG MOOK KIM et al.** Modulation and pre-equalization method to minimize time delay in equalization digital on-channel repeater. *IEEE transactions on broadcasting,* 01 Juin 2008